# EUROPEAN PATENT SPECIFICATION

(11) **EP 3 845 809 B1**
(45) Date of publication and mention of the grant of the patent: **29.11.2023**
(21) Application number: 19425102.1
(22) Date of filing: 31.12.2019
(51) Int. Cl.: F23R 3/00, B25J 11/00, B25J 17/00

(54) **DEVICE AND METHOD FOR INSPECTING A COMBUSTOR**
VORRICHTUNG UND VERFAHREN ZUR INSPEKTION EINER BRENNKAMMER
DISPOSITIF ET PROCÉDÉ D'INSPECTION D'UNE CHAMBRE DE COMBUSTION

(43) Date of publication of application: 07.07.2021
(73) Proprietor: ANSALDO ENERGIA S.p.A., 16152 Genova (IT)
(72) Inventor: Pignone, Enrico, 16152 Genova (IT); Stanchi, Paolo, 16152 Genova (IT)
(74) Representative: Studio Torta S.p.A.

(56) References cited:
- WO-A1-2013/116078
- WO-A2-2008/002454
- DE-A1- 19 924 607
- DE-U1-202004 012 584
- US-A1- 2012 312 103
- US-A1- 2016 212 360
- US-A1- 2017 362 939

## Description

### TECHNICAL FIELD

The present invention relates to a device and method for inspecting a combustor. In particular, the device and the method of the present invention are useful for inspecting the combustor of an industrial gas turbine assembly for power generation.

### BACKGROUND

As is known, an industrial gas turbine assembly for power generation comprises a compressor, a combustor and a turbine.

In particular, the compressor comprises an inlet supplied with air and a plurality of rotating blades compressing the passing air. The compressed air leaving the compressor flows into a plenum, i.e. a closed volume delimited by an outer casing, and from there into the combustor. Inside the combustor and by means of a plurality of burners the compressed air is mixed with at least one fuel and combusted. The resulting hot gas leaves the combustor and expands in the turbine. In the turbine the hot gas expansion moves rotating blades connected to a rotor, performing work.

The inner walls of the combustor require effective thermal protection as during combustion they are exposed to high-temperatures.

Tiles made of ceramic material are usually applied on the walls of the combustor for protection. Ceramic materials are suitable for this application because they provide good thermal protection and have low conductivity.

Damage to these tiles is a critical element for the proper functioning of the plant, as any breaking of one or more tiles could cause serious damages to the combustor.

The defects normally found in ceramic tiles are:
- cracks of different depth and position;
- breaking of corners and edges (chipping);
- surface erosion.

These defects can occur during the life cycle of the combustor, so several maintenance actions are carried out to check the correct condition of the tiles.

All maintenance scenarios involve stopping the operation of the combustor, and therefore the energy production by the plant, for the time necessary for manual inspection and replacement of the damaged parts.

Moreover, the combustor is normally inspected by a human operator, highly trained, which is normally called in the field as the "fact finder".

This solution has several drawbacks as a "fact finder" operator is always required, and (if available) the operator needs to travel to the power plant site and has to access to the combustor when it has been properly cooled (the temperature inside of the combustor cannot be greater than 40°C - i.e. usually after 1.5 - 2 days of cooling down).

Therefore, such process do not permit to restart quickly the plant after a not-scheduled stop. An example of a not-scheduled stop is the automatic shutdown event activated by the gas turbine protection system after the detection of high accelerations of the gas turbine. In such case, the inspection of the interior of the combustor is mandatory as in this case, the probability that the ceramic tiles may have been damaged by high accelerations is not negligible.

An inspection device and method is disclosed in document DE19924607.

### SUMMARY

The object of the present invention is therefore to develop an automatic inspection device and method, aimed at supporting the operator in the checking phase of the combustor

In particular, it is an object of the present invention to provide a device for inspecting a combustor, which is able to speed up the inspection time and therefore to reduce the duration of the outage of the plant.

According to said object the present invention relates to a device for inspecting a combustor comprising:
a sensing probe;
an arm having one first end coupled to the sensing probe and one second end coupled to a base; the arm comprising a plurality of modules coupled to one another; each module being coupled to the adjacent module with a respective rotational joint; each rotational joint being independently controlled; the sensing probe being coupled to the first end with a joint with at least three degrees of freedom

It is another object of the present invention to provide a method for inspecting a combustor. According to such object the present invention relates to a method for inspecting a combustor according to claim 11.

### BRIEF DESCRIPTION OF THE DRAWINGS

The present invention will now be described with reference to the accompanying drawings, which illustrate some non-limitative embodiment, in which:
- figure 1 is a schematic representation of a gas turbine assembly;
- figure 2 is a schematic representation, with parts removed for clarity, of a device for inspection of a combustor according to the present invention;
- figure 3 is a perspective view of a first detail of the device for inspecting a combustor of figure 2;
- figure 4 is a perspective view of a second detail of the device for inspecting a combustor of figure 2;
- figures 5a-5h are schematic representation, with parts in section and parts removed for clarity, of a sequence of the method for inspecting a combustor according to the present invention;
- figure 6a-6f are schematic representation, with parts in section and parts removed for clarity, of a further sequence of the method for inspecting a combustor;
- figure 7 is a schematic representation, with parts in section and parts removed for clarity, of a third detail of the device of figure 2 according to variant of the present invention;
- figure 8 is a schematic representation, with parts in section and parts removed for clarity, of the third detail of the device of figure 2 according to a further variant of the present invention.

### DETAILED DESCRIPTION OF EXEMPLARY EMBODIMENTS

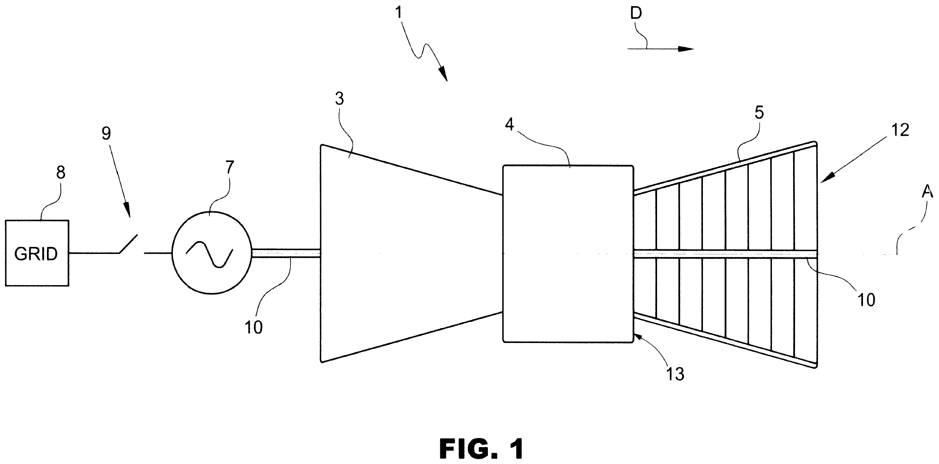

In figure 1, reference numeral 1 indicates a gas turbine assembly for electrical energy production comprising a compressor 3, a combustor 4, a gas turbine 5 and a generator 7, which transforms the mechanical power supplied by turbine 5 into electrical power to be supplied to an electrical grid 8, connected to the generator 7 via a switch 9.

A variant not shown provides for assembly 1 to be of the combined cycle type and including, in addition to the gas turbine 5 and generator 7, also a steam turbine.

The gas turbine 5 extends along a longitudinal axis A and is provided with a shaft 10 (also extending along axis A) to which compressor 3 and generator 7 are also connected.

Gas turbine 5 comprises an expansion channel 12 wherein the hot gas working fluid coming from the combustor 4 flows in a direction D.

The expansion channel 12 has a section, which radially increases along the axis A in the direction D.

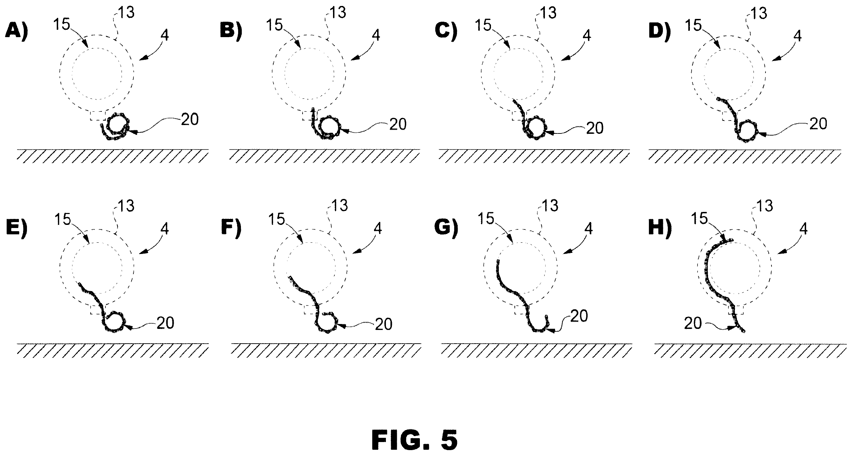

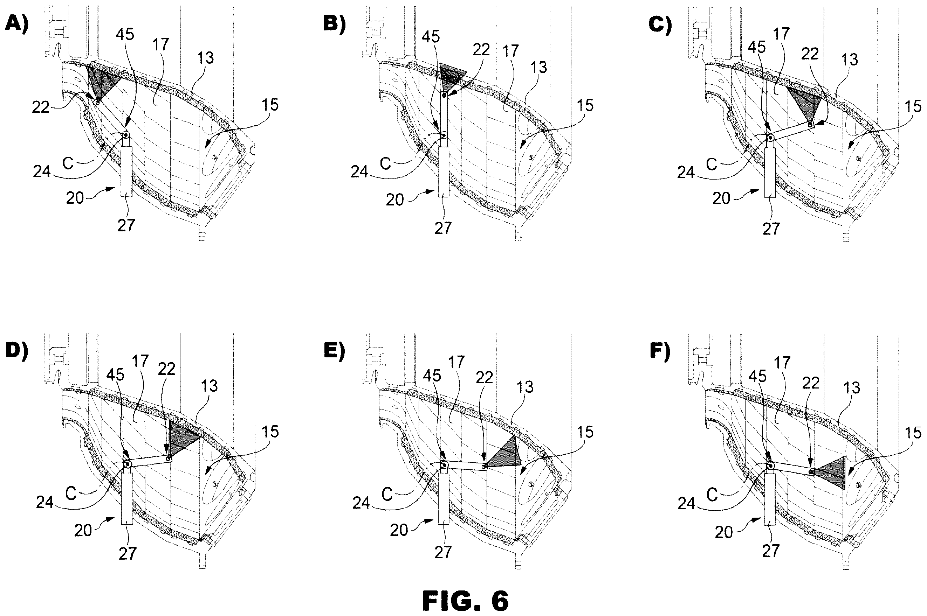

The combustor 4 is provided with a casing 13, which defines a combustion area 15 (see figures 5a-5h and 6a-6f) .

Preferably, the combustion chamber 4 is of annular type and has a substantially toroidal shape.

Casing 13 has a substantially annular shape and is provided with an inner lining 17 (see figures 6a-6f), defined by a plurality of tiles made of refractory material, which are arranged in adjacent columns.

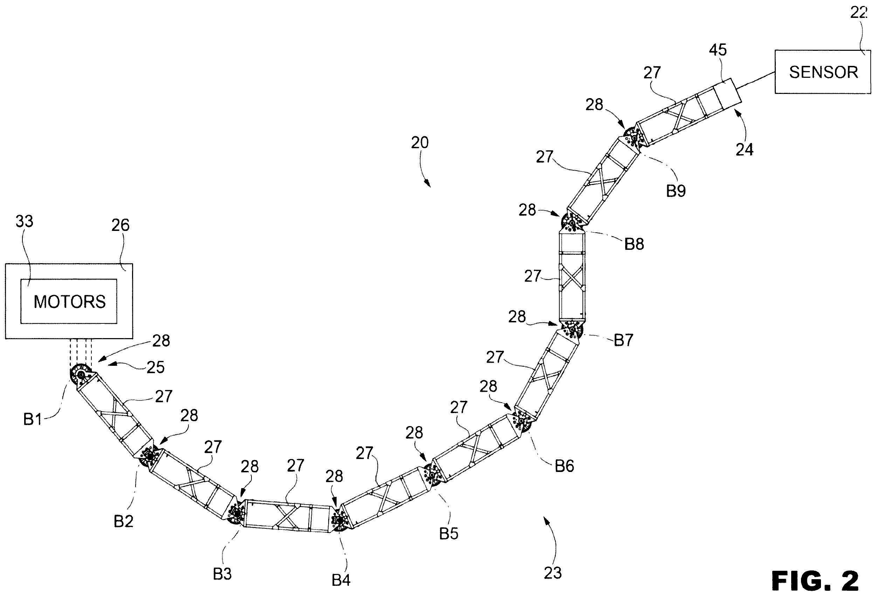

In figure 2 number 20 indicates a device for inspecting the combustor 4 according to the present invention.

Device 20 comprises a sensing probe 22 and an arm 23 having one first end 24 coupled to the sensing probe 22 and one second end 25 coupled to a base 26.

The arm 23 comprising a plurality of modules 27 coupled to one another.

Preferably, the modules 27 have a light structure. In the non-limiting example here disclosed and illustrated, the modules 27 have a reticular structure.

In particular, each module 27 is coupled to the adjacent module 27 with a respective rotational joint 28.

Each rotational joint 28 is independently controlled. In other words, each rotational joint 28 can move independently from the others.

In the non-limiting example here disclosed and illustrated the rotational joints 28 are nine and the modules 27 are nine too.

Each rotational joint 28 is configured to allow the rotation about a respective axis of rotation B1, B2, B3, ... B9. Preferably, the axes of rotation B1, B2, B3, ... B9 of the rotational joints 28 are parallel.

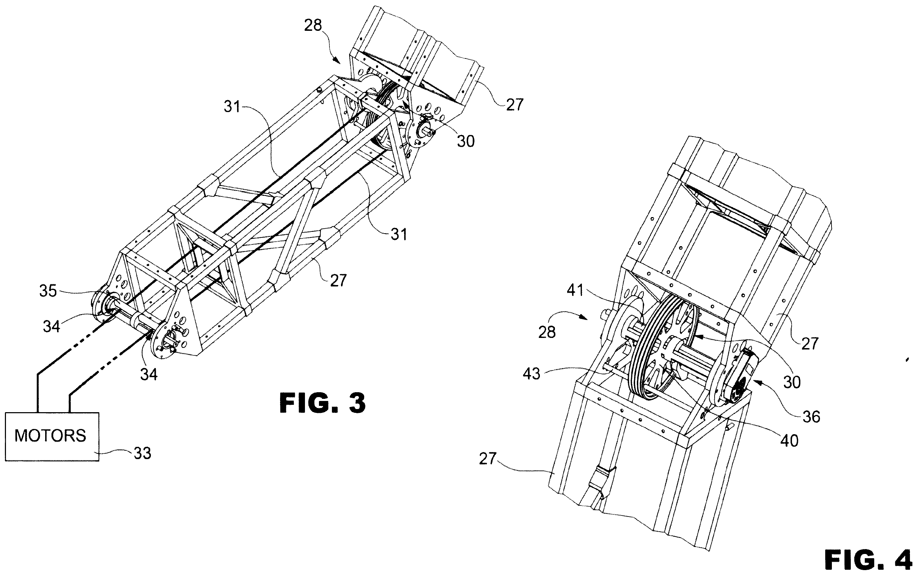

With reference to figure 3, each rotational joint 28 comprises a main pulley 30 and two cables 31, which are fixed to the main pulley 30 and move in opposite directions.

Each cable 31 is coupled to a respective motor 33 (schematically represented with a box in figures 2 and 3). Each motor 33 is configured to move the respective cable 31 in a controlled way. Each motor 33, in fact, is controlled by a control device (not shown).

In the non-limiting example here disclosed and illustrated, all the motors of the rotational joints 28 are housed in the base 26.

Preferably, the base 26 is coupled to a carriage (not shown) useful for moving the device 20.

In the non-limiting example here disclosed and illustrated, each module 27 comprises at least one cable guide 35 configured to house at least a portion of at least one cable 31 of the rotational joint 28 associated to said module 27.

Preferably, the cable guide 35 is a bar provided with at least one aperture 34 through which the cables pass.

Between the respective motor 33 and the main pulley 30 each cable 31 can cooperate with at least one free pulley (not shown) for guiding the cable 31 along the desired path and for avoiding intersections between the cables of the others rotational joints.

Preferably, each rotational joint 28 comprises at least one position transducer 36 (better visible in figure 4), able to detect the current relative position between the modules 27 connected by the main pulley 30.

In the non-limiting example here disclosed and illustrated the position transducer 36 is an encoder fixed to one of the modules 27 coupled by the rotational joint 28 and able to detect the position of the other module of the modules 27 coupled by the rotational joint 28 or, alternatively, the position of the respective main pulley 30.

In the non-limiting example here disclosed and illustrated and with reference to figure 4, the main pulley 30 comprises a disc 40, which is centrally crossed by a pin 41 which is fixed to one of the modules 27 coupled by the rotational joint 28. The pin 41 and the pulley 30 are free to move one with respect to the other. Preferably, a bearing (not visible) is arranged between the pulley 30 and the pin 41.

The position transducer 36 is preferably coupled to the module 27 fixed to pin 41 in the proximity of one end of the pin 41.

The disc 40 is fixed to the other of the modules 27 coupled by the rotational joint 28, preferably by means of at least one bar 43.

In other words, each rotational joint 28 couples two modules 27. One of the two modules 27 is fixed to the main pulley 30, while the other of the two modules 27 is fixed to the pin 41 passing through the main pulley 41.

With reference to figure 2 and to figures 6a-6f, 7 and 8, the sensing probe 22 is coupled to the first end 24 with a further joint 45.

Joint 45 can be coupled to one or more actuating devices (not shown) configured to move the joint 45 in a controlled way. The one or more actuating devices associated to the joint 45 can be housed in the base 26 or can be arranged in the proximity of the joint 45. In case the actuating devices are arranged near the joint 45, a dedicated cooling device can be provided for properly cooling them.

In the example illustrated in figures 6a-6f, not part of the invention, the joint 45 is a rotational joint configured to allow the rotation about a further axis of rotation C, which is orthogonal to the axes of rotation B1,B2,...B9 of the rotational joints 28 connecting the modules 27. In this way the sensing probe 22 can be moved closer to the tiles of the inner lining 17 in order to get a proper signal.

According to the invention, the joint 45 has at least three degrees of freedom that allow the sensor probe 22 to be oriented in various spatial directions.

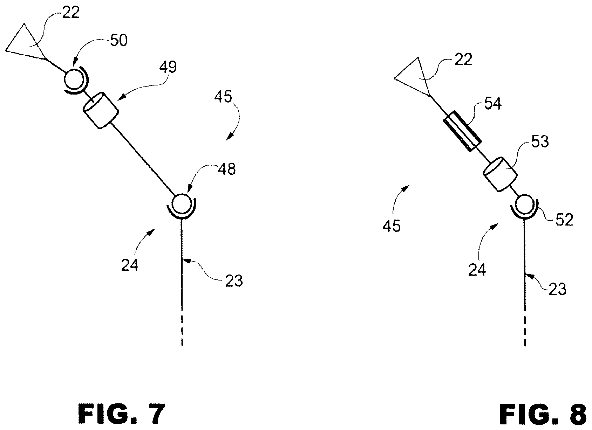

Preferably, as shown in figure 7, the joint 45 comprises a first rotational joint 48, a second rotational joint 49 and a third rotational joint 50.

Preferably, the first rotational joint 48, the second rotational joint 49 and the third rotational joint 50 are joints with a range of movement +/- 180°.

The first rotational joint 48 is coupled to the end 24 of the arm 23. In other words, the first rotational joint 48 is coupled to the terminal module 27.

According to a variant not shown, the joint 45 is a spherical joint.

According to the variant shown in figure 8, the joint 45 has three degrees of freedom as it comprises a first rotational joint 52, a second rotational joint 53 and a telescopic mechanism 54.

The telescopic mechanism 54 allows the sensor probe 22 to get closer to the tiles of the inner lining 17.

Preferably, the first rotational joint 52 and the second rotational joint 53 are joints with a range of movement +/-180° .

In the non-limiting example here disclosed and illustrated, the sensing probe 22 is a multi-sensing probe.

Preferably, the sensing probe 22 comprises a thermal and optical imaging camera configured to acquires IR and RGB images in order to detect and classify damages inside the combustor 4.

Preferably, the data collected by the sensing probe 22 are collected and elaborated by a data processor in order to map the entire inner lining 17.

Preferably, the sensing probe 22 comprises also a cooling device and a temperature sensor (not shown) able to detect a temperature value useful for the cooling device.

The sensing probe 22 and the moving of the joint 45 is regulated by the control device (not shown).In use, the inspection of the combustor 4 is made when the plant is stopped.

With reference to figures 5a-5h, the sensor probe 22 is introduced into the combustion area 15 through an opening 50 of the casing 14 and is moved along at least a portion of a circumferential path thanks to the regulation of the position of each rotational joint 28 of the arm 23.

In particular, the sensing probe 22 is moved along the circumferential path avoiding any contacts between the sensing probe 22 and inner lining 17 of the combustor 4.

The position of each rotational joint 28 is regulated by opportunely actuating the motors 22 associated to the rotational joint 28.

During the inspection, the base 26 is always maintained outside the combustion area 15.

As visible in figure 5a, after and before the inspection the device 20 is in a parking position, with the arm 23 rolled up on itself. In the parking position, the device 20 can be easily transported.

According to a variant not illustrated, motors of the joint 45 (the one moving the sensor probe 22) are supported by the arm 23. Preferably, in this case, the motors are provided with a cooling arrangement.

With reference to figure 6a-6f, at each position along the circumferential path the sensing probe 22 can have another degree of freedom thanks to the rotational joint 45. In this way, a complete mapping of the inner lining 17 of the combustion chamber can be simply obtained.

With reference to the variant of figure 7, thanks to the structure of the joint 45 the sensing probe 22 can move with three degrees of freedom. In this way the sensing probe 22 can move properly inside the combustion area in order to get current images of the inner lining 17.

With reference to the variant of figure 8, thanks to the structure of the joint 45 the distance between the inner lining 17 and the sensing probe 22 can be properly regulated in order to acquire optimal images.

IR images can be acquired without the aid of artificial lighting, while RGB images are acquired preferably when an artificial light (not shown) is activated in order to get optimal visible images of the inner lining 17.

IR images and RGB images can be acquired contemporaneously or in different steps.

Control device is configured to identify in IR images the areas wherein the gradient of temperature is associated to a defect indication. These areas are candidates to be defects/cracks, as near defect/cracks the temperature is normally different from the temperature of the other undamaged areas of the inner lining 17.

RGB images are then useful to evaluate, by a different method, the potential defects found with IR images and to evaluate other type of defects (not limited to cracks) in the combustor 4.

In this way, advantageously, both the sensors (IR and RGB) are exploited to have a reliable detection of the defects.

Advantageously, the robotic arm 23 can move in higher temperature environment (50°-200°C) with respect to a human operator (max 40°C).

Moreover, as the rotational joints 28 are preferably moved by motors housed in the base 26 and in the arm 23 no motors are arranged, the inspection can start also when the internal temperature is around 100°C.

Therefore, the inspection can be performed in advance with respect to the current solution with a human operator.

Another important advantage is that the human operator requires the opening of a wide "man-hole" to access the combustion area 15. For example, the area of this "man-hole" corresponds to a surface of six tiles.

Using the device of the present invention a smaller and faster aperture 50 is required to enter the combustion area 15. Normally, the area of the aperture 50 required for the access of the device according to the invention corresponds to a surface of one or maximum two tiles.

In this way the operations required for accessing the combustion area (i.e. creating the access hole) are faster.

Therefore, thanks to the device of the present invention the unscheduled stoppage time is shortened, thus limiting the production loss and, consequently, the economic loss.

It is very important, in fact, to make inspections (especially IR video inspection) when the temperature of the tiles are around 100°C. Therefore, is crucial with a reduced cooling down time after the unit shutdown and perform such inspection in a short time.

The above described method and device for inspecting the combustor advantageously introduce an automation of the process of analysis and detection of defects in the tiles.

Finally, it is clear that modifications and variants can be made to the method and to the device described herein without departing from the scope of the present invention, as defined in the appended claims.

## Claims

1. A device for inspecting a combustor comprising:
a sensing probe (22);
an arm (23) having one first end (24) coupled to the sensing probe (22) and one second end (25) coupled to a base (26); the arm (23) comprising a plurality of modules (27) coupled to one another; each module (27) being coupled to the adjacent module (27) with a respective rotational joint (28); **characterised in that** each rotational joint (28) is independently controlled and **in that** the sensing probe (22) is coupled to the first end (24) with a joint (45) with at least three degrees of freedom.

2. Device according to claim 1, wherein the rotational joints (28) allow the rotation about respective axes of rotation (B1, B2, B3....Bn) which are parallel.

3. Device according to claim 1 or 2, wherein each rotational joint (28) comprises a main pulley (30) and two cables (31) fixed to the main pulley (30) and moving in opposite directions; each cable (31) being coupled to a respective motor (33); each motor (33) being configured to move the respective cable (31) in a controlled way.

4. Device according to claim 3, wherein the motors (33) are housed in the base (26).

5. Device according to claim 3, wherein the motors (33) are supported by the arm (23).

6. Device according to anyone of claims from 3 to 5, wherein the main pulley (30) is fixed to one of the modules (27) connected by the rotational joint (28) comprising said main pulley (30).

7. Device according to anyone of claims from 3 to 6, wherein each rotational joint (28) comprises at least one position transducer (36), able to detect the relative current position between the modules (27) coupled by said rotational joint (28).

8. Device according to anyone of claims from 3 to 7, wherein each module (27) comprises at least one cable guide (35) configured to house at least a portion of at least one cable (31) of the rotational joint (28).

9. Device according to anyone of the foregoing claims, wherein the sensing probe (22) is coupled to the first end (24) with a further rotational joint (45) configured to allow the rotation about a further axis of rotation (C), which is orthogonal to at least one axis of rotation (B1, B2, ..Bn) of the rotational joints (28) connecting the modules (27).

10. Device according to anyone of the foregoing claims, wherein the sensing probe (22) comprises a thermal imaging camera.

11. Method for inspecting a combustor (4), the combustor (4) defining a combustion area (15), the method comprising: moving a sensing probe (22) inside the combustion area (15) using a device as claimed in any of the foregoing claims.

12. Method according to claim 11, wherein the step of moving the sensing probe (22) comprises moving the sensing probe (22) along at least a portion of a circumferential path and preferably without touching an inner lining (17) of the combustor (4).

13. Method according claim 11 or 12, wherein the step of moving the sensing probe (22) inside the combustion area (15) along at least a portion of a circumferential path comprises moving independently each rotational joint (28) .

14. Method according to claim 13, wherein each rotational joint (28) comprises a main pulley (30) and two cables (31) fixed to the main pulley (30) and moving in opposite directions; each cable (31) being coupled to a respective motor (33); each motor (33) being configured to move the respective cable (31) in a controlled way; the step of moving independently each rotational joint (28) comprises controlling the motors (33) connected to the cables (31) of each rotational joint (28).

15. Method according to anyone of claims from 11 to 14, wherein the sensing probe (22) comprises at least one IR camera; the method comprising:
acquiring IR images of an inner lining (17) of the combustor (4);
identifying areas of the inner lining (17) having a temperature gradient associated to a defect indication.

16. Method according to claim 15, wherein the sensing probe (22) comprises at least one RGB camera; the method comprising: acquiring RGB images of the inner lining (17) of the combustor (4).

17. Method according to claim 16, wherein the step of acquiring RGB images is made with an artificial light activated.

## Patentansprüche

1. Vorrichtung zum Inspizieren einer Brennkammer, umfassend:
eine Fühlersonde (22);
einen Arm (23) mit einem ersten Ende (24), das mit der Fühlersonde (22) gekoppelt ist, und einem zweiten Ende (25), das mit einer Basis (26) gekoppelt ist; wobei der Arm (23) mehrere Module (27) aufweist, die miteinander gekoppelt sind; wobei jedes Modul (27) mit dem benachbarten Modul (27) über ein entsprechendes Drehgelenk (28) gekoppelt ist;
**dadurch gekennzeichnet, dass**
jedes Drehgelenk (28) unabhängig gesteuert wird und dass die Fühlersonde (22) mit dem ersten Ende (24) über ein Gelenk (45) mit wenigstens drei Freiheitsgraden gekoppelt ist.

2. Vorrichtung nach Anspruch 1, wobei die Drehgelenke (28) eine Drehung um entsprechende Drehachsen (B1, B2, B3, ... Bn) ermöglichen, die parallel sind.

3. Vorrichtung nach Anspruch 1 oder 2, wobei jedes Drehgelenk (28) eine Hauptscheibe (30) und zwei Seile (31) umfasst, die an der Hauptscheibe (30) befestigt sind und sich in entgegengesetzte Richtungen bewegen; wobei jedes Seil (31) mit einem entsprechenden Motor (33) gekoppelt ist; wobei jeder Motor (33) dazu konfiguriert ist, das entsprechende Seil (31) kontrolliert zu bewegen.

4. Vorrichtung nach Anspruch 3, wobei die Motoren (33) in der Basis (26) untergebracht sind.

5. Vorrichtung nach Anspruch 3, wobei die Motoren (33) von dem Arm (23) getragen werden.

6. Vorrichtung nach einem der Ansprüche 3 bis 5, wobei die Hauptscheibe (30) an einem der Module (27) befestigt ist, die durch das Drehgelenk (28) verbunden sind, das die Hauptscheibe (30) umfasst.

7. Vorrichtung nach einem der Ansprüche 3 bis 6, wobei jedes Drehgelenk (28) wenigstens einen Positionsgeber (36) umfasst, der fähig ist, die relative aktuelle Position zwischen den über das Drehgelenk (28) gekoppelten Modulen (27) zu erfassen.

8. Vorrichtung nach einem der Ansprüche 3 bis 7, wobei jedes Modul (27) wenigstens eine Kabelführung (35) umfasst, die dazu konfiguriert ist, wenigstens einen Abschnitt wenigstens eines Seils (31) des Drehgelenks (28) aufzunehmen.

9. Vorrichtung nach einem der vorangehenden Ansprüche, wobei die Fühlersonde (22) mit dem ersten Ende (24) über ein weiteres Drehgelenk (45) verbunden ist, das dazu konfiguriert ist, eine Drehung um eine weitere Drehachse (C) zu ermöglichen, die orthogonal zu wenigstens einer Drehachse (B1, B2, ... Bn) der die Module (27) verbindenden Drehgelenke (28) ist.

10. Vorrichtung nach einem der vorangehenden Ansprüche, wobei die Fühlersonde (22) eine Wärmebildkamera umfasst.

11. Verfahren zum Inspizieren einer Brennkammer (4), wobei die Brennkammer (4) einen Verbrennungsbereich (15) definiert, und wobei das Verfahren umfasst:
Bewegen einer Fühlersonde (22) innerhalb des Verbrennungsbereichs (15) unter Verwendung einer Vorrichtung gemäß einem der vorangehenden Ansprüche.

12. Verfahren nach Anspruch 11, wobei der Schritt des Bewegens der Fühlersonde (22) das Bewegen der Fühlersonde (22) entlang wenigstens eines Abschnitts einer Umfangsbahn und vorzugsweise ohne Berührung einer Innenauskleidung (17) der Brennkammer (4) umfasst.

13. Verfahren nach Anspruch 11 oder 12, wobei der Schritt des Bewegens der Fühlersonde (22) innerhalb des Verbrennungsbereichs (15) entlang wenigstens eines Abschnitts einer Umfangsbahn das unabhängige Bewegen jedes Drehgelenks (28) umfasst.

14. Verfahren nach Anspruch 13, wobei jedes Drehgelenk (28) eine Hauptscheibe (30) und zwei Seile (31) umfasst, die an der Hauptscheibe (30) befestigt sind und sich in entgegengesetzte Richtungen bewegen; wobei jedes Seil (31) mit einem entsprechenden Motor (33) gekoppelt ist; wobei jeder Motor (33) dazu konfiguriert ist, das entsprechende Seil (31) kontrolliert zu bewegen; wobei der Schritt des unabhängigen Bewegens jedes Drehgelenks (28) ein Steuern der Motoren (33) umfasst, die mit den Seilen (31) eines jeden Drehgelenks (28) verbunden sind.

15. Verfahren nach einem der Ansprüche 11 bis 14, wobei die Fühlersonde (22) wenigstens eine IR-Kamera umfasst; wobei das Verfahren umfasst:
Erfassen von IR-Bildern einer Innenauskleidung (17) der Brennkammer (4);
Identifizieren von Bereichen der Innenauskleidung (17), die einen Temperaturgradienten aufweisen, der einer Defektanzeige zugeordnet ist.

16. Verfahren nach Anspruch 15, wobei die Fühlersonde (22) wenigstens eine RGB-Kamera umfasst; wobei das Verfahren umfasst: Erfassen von RGB-Bildern der Innenauskleidung (17) der Brennkammer (4).

17. Verfahren nach Anspruch 16, wobei der Schritt der Erfassung von RGB-Bildern mit einem aktivierten Kunstlicht durchgeführt wird.

## Revendications

1. Dispositif d'inspection d'une chambre de combustion, comprenant :
une sonde de détection (22) ;
un bras (23) présentant une première extrémité (24) couplée à la sonde de détection (22) et une seconde extrémité (25) couplée à une base (26) ; le bras (23) comprenant une pluralité de modules (27) couplés les uns aux autres ; chaque module (27) étant couplé au module adjacent (27) avec une articulation rotative respective (28) ; **caractérisé en ce que** chaque articulation rotative (28) est commandée indépendamment et **en ce que** la sonde de détection (22) est couplée à la première extrémité (24) avec une articulation (45) présentant au moins trois degrés de liberté.

2. Dispositif selon la revendication 1, dans lequel les articulations rotatives (28) permettent la rotation autour d'axes de rotation respectifs (B1, B2, B3...Bn) qui sont parallèles.

3. Dispositif selon la revendication 1 ou 2, dans lequel chaque articulation rotative (28) comprend une poulie principale (30) et deux câbles (31) fixés à la poulie principale (30) et se déplaçant dans des directions opposées ; chaque câble (31) étant couplé à un moteur respectif (33) ; chaque moteur (33) étant configuré pour déplacer le câble respectif (31) d'une manière commandée.

4. Dispositif selon la revendication 3, dans lequel les moteurs (33) sont logés dans la base (26).

5. Dispositif selon la revendication 3, dans lequel les moteurs (33) sont supportés par le bras (23).

6. Dispositif selon l'une quelconque des revendications 3 à 5, dans lequel la poulie principale (30) est fixée à l'un des modules (27) reliés par l'articulation rotative (28) comprenant ladite poulie principale (30).

7. Dispositif selon l'une quelconque des revendications 3 à 6, dans lequel chaque articulation rotative (28) comprend au moins un transducteur de position (36), capable de détecter la position actuelle relative entre les modules (27) couplés par ladite articulation rotative (28).

8. Dispositif selon l'une quelconque des revendications 3 à 7, dans lequel chaque module (27) comprend au moins un guide de câble (35) configuré pour loger au moins une partie d'au moins un câble (31) de l'articulation rotative (28).

9. Dispositif selon l'une quelconque des revendications précédentes, dans lequel la sonde de détection (22) est couplée à la première extrémité (24) avec une articulation rotative supplémentaire (45) configurée pour permettre la rotation autour d'un axe de rotation supplémentaire (C), qui est orthogonal à au moins un axe de rotation (B1, B2, ..Bn) des articulations rotatives (28) reliant les modules (27).

10. Dispositif selon l'une quelconque des revendications précédentes, dans lequel la sonde de détection (22) comprend une caméra d'imagerie thermique.

11. Procédé d'inspection d'une chambre de combustion (4), la chambre de combustion (4) définissant une zone de combustion (15), le procédé comprenant l'étape consistant à :
déplacer une sonde de détection (22) à l'intérieur de la zone de combustion (15) en utilisant un dispositif selon l'une quelconque des revendications précédentes,

12. Procédé selon la revendication 11, dans lequel l'étape de déplacement de la sonde de détection (22) comprend un déplacement de la sonde de détection (22) le long d'au moins une partie d'un trajet circonférentiel et de préférence sans toucher un revêtement intérieur (17) de la chambre de combustion (4),

13. Procédé selon la revendication 11 ou 12, dans lequel l'étape de déplacement de la sonde de détection (22) à l'intérieur de la zone de combustion (15) le long d'au moins une partie d'un trajet circonférentiel comprend un déplacement indépendamment de chaque articulation rotative (28).

14. Procédé selon la revendication 13, dans lequel chaque articulation rotative (28) comprend une poulie principale (30) et deux câbles (31) fixés à la poulie principale (30) et se déplaçant dans des directions opposées ; chaque câble (31) étant couplé à un moteur respectif (33) ; chaque moteur (33) étant configuré pour déplacer le câble respectif (31) de manière commandée ; l'étape de déplacement de manière indépendante de chaque articulation rotative (28) comprend une commande des moteurs (33) connectés aux câbles (31) de chaque articulation rotative (28).

15. Procédé selon l'une quelconque des revendications 11 à 14, dans lequel la sonde de détection (22) comprend au moins une caméra IR ; le procédé comprenant les étapes consistant à :
acquérir des images IR d'un revêtement intérieur (17) de la chambre de combustion (4) ;
identifier les zones du revêtement intérieur (17) présentant un gradient de température associé à une indication de défaut.

16. Procédé selon la revendication 15, dans lequel la sonde de détection (22) comprend au moins une caméra RVB ; le procédé comprenant : une acquisition d'images RVB du revêtement intérieur (17) de la chambre de combustion (4),

17. Procédé selon la revendication 16, dans lequel l'étape d'acquisition d'images RVB est réalisée avec une lumière artificielle activée.
